# EUROPEAN PATENT SPECIFICATION

(11) **EP 4 427 566 B1**
(45) Date of publication and mention of the grant of the patent: **28.10.2026**
(21) Application number: 24157040.7
(22) Date of filing: 12.02.2024
(51) Int. Cl.: A01C 7/20, G06T 7/00

(54) **METHOD FOR EVALUATING PROVIDED DATA ACCURACY FOR AN AGRICULTURAL WORK MACHINE**
VERFAHREN ZUR BEWERTUNG DER BEREITGESTELLTEN DATENGENAUIGKEIT FÜR EINE LANDWIRTSCHAFTLICHE ARBEITSMASCHINE
PROCÉDÉ D'ÉVALUATION DE LA PRÉCISION DE DONNÉES FOURNIES POUR UNE MACHINE DE TRAVAIL AGRICOLE

(30) Priority: 09.03.2023 US 202363451017 P; 18.01.2024 US 202418416280
(43) Date of publication of application: 11.09.2024
(73) Proprietor: Deere & Company, Moline, IL 61265 (US)
(72) Inventor: Herman, Carolyn, Mannheim (DE); Quinn, Daniel, Mannheim (DE); Sturgeon, Luke, Mannheim (DE); Engel, Colin D., Mannheim (DE); Orth, Matthew, Mannheim (DE); Wickman, Hanna J., Mannheim (DE); Creger, Tucker, Mannheim (DE); Vickers, Nicholas E., Mannheim (DE)
(74) Representative: Reichert, Christian

(56) References cited:
- US-A1- 2018 184 581
- US-A1- 2021 307 236

## Description

### Field of Disclosure

The present disclosure relates to determining a confidence for a camera sensor and more specifically to initiating a response indicating the confidence of the camera data.

### Background of the Disclosure

From US 2021/0307236 A1 an agricultural trench depth sensing system and method are known, which include a light source (2002), a receiver (2003) and a sensor (2004). The light source directs light downwardly toward a trench previously opened in a soil surface. The receiver is disposed at an angle relative to the light source to receive reflected light. A sensor connected to the receiver senses a pattern of the reflected light. A monitoring system in com-munication with the sensor, generates a data frame contain-ing triangulated line coordinates and intensity values of the reflected light indicative of a measured depth of the trench. The generated data frame may be associated with GPS coordinates for generating spatial maps and may be used to control operating parameters. The generated data frames may also identify relative soil moisture versus trench depth, or presence of dry topsoil or residue in the trench, or to identify seeds, seed spacing and seed depth.

Furthermore, US 2018/0184581 Al discloses systems, methods and apparatus provided for monitoring soil properties including soil moisture, soil electrical conductivity and soil temperature. Embodiments include a soil reflectivity sensor and/or a soil temperature sensor for measuring moisture and temperature.

Planter row units are commonly used in the agricultural industry to plant seed and corresponding commodity in the ground. Planter row units often include various groundengaging tools that assist in the commodity or seed deposition process by, for example, opening furrows to form trenches, placing or depositing commodity and seed in the trenches, packing the soil, and closing the furrows or trenches over the newly-deposited commodity and seed. From the operator's cab, it is difficult to see the shape of the trench after formation of the trench because the closing wheels on the planter row unit close or replace the displaced soil into the trench after depositing the seed and commodity in the trench. It is also difficult to see deposition of the commodity and seeds in the trench because the closing wheels close the trench quickly.

### Summary

The invention is a method for evaluating provided data accuracy for an agricultural machine. The method includes obtaining image data from a camera on the agricultural machine, processing the image data for a time interval and identifying inadequate images, determining the number of inadequate images compared to the total number of images for the time interval, generating a camera confidence based on the ratio of inadequate images to total images for the time interval, and providing a feedback indicating the camera confidence.

The image data comprises images of a furrow. Inadequate images are images that cannot be evaluated to determine a depth of a furrow. In yet another example, the feedback is displayed visually on a user interface. In part of this example, the user interface displays a bar configured to change in size to correspond with the camera confidence. Further, the bar transitions from solid to hashed when the camera confidence is below a threshold.

In yet another example of this embodiment, the feedback is considered by an automated system. In part of this example, the automated system is a downforce automation system. In a different part of this example, the automated system is a row cleaner automation system. In yet another part of this example, the automated system is a depth control automation system.

Another embodiment of this disclosure is a method for evaluating quality of provided values for an agricultural machine. The method includes obtaining a plurality of values for a time interval, processing the plurality of values by comparing each of the plurality of values to one or more other of the plurality of values, identifying the number of outliers in the plurality of values for the time interval, generating a value confidence for the time interval by comparing the number of outliers with the total number of plurality of values for the time interval, and providing feedback indicating the value confidence.

In one example of this embodiment, each of the plurality of values comprise a furrow depth value. In part of this example, the furrow depth value is determined from image data provided by a camera.

In another example of this embodiment, the feedback is displayed visually on a user interface. In part of this example, the user interface displays a bar configured to change in size to correspond with the value confidence. In yet another part of this example, the bar transitions from solid to hashed when the value confidence is below a threshold.

In another example of this embodiment, the feedback is considered by an automated system. In one part of this example, the automated system is a downforce automation system. In another part, the automated system is a row cleaner automation system. In yet another part of this example, the automated system is a depth control automation system.

### Brief Description of the Drawings

The above-mentioned aspects of the present disclosure and the manner of obtaining them will become more apparent and the disclosure itself will be better understood by reference to the following description of the embodiments of the disclosure, taken in conjunction with the accompanying drawings, wherein:
Fig. 1 is a side view of one embodiment of a planter row unit;
Fig. 2 is a schematic representation of an open furrow with a seed positioned therein by a planter row unit;
Fig. 3 is a schematic representation of components of an agricultural work machine;

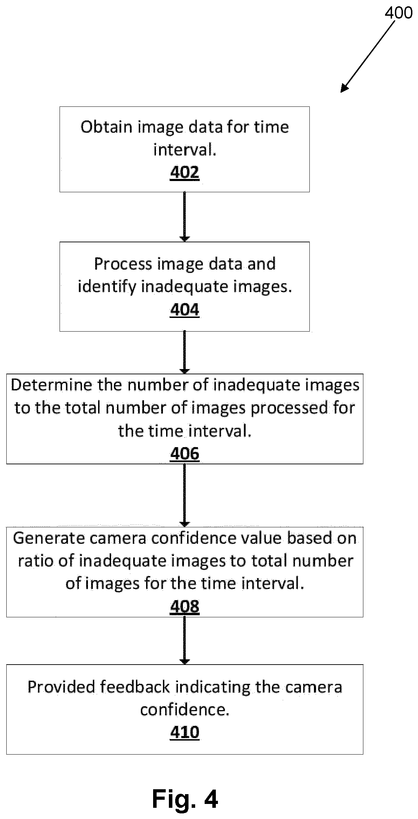

Fig. 4 is a schematic representation of a logic flow for providing a camera confidence; and
Fig. 5 is a schematic representation of a logic flow for providing a furrow depth consistency.
Corresponding reference numerals are used to indicate corresponding parts throughout the several views.

### Detailed Description

The embodiments of the present disclosure described below are not intended to be exhaustive or to limit the disclosure to the precise forms in the following detailed description. Rather, the embodiments are chosen and described so that others skilled in the art may appreciate and understand the principles and practices of the present disclosure.

Some of the benefits of the present disclosure include determining the confidence a system may place on image data. More specifically, the present disclosure utilizes a camera attached to the planter row unit to provide image data to a computing device to be further analyzed to determine characteristics of the trench and any commodity therein among other things. Among other things, the image data provided by the camera may be analyzed to determine one or more of the profile of the seed trench walls, the depth of the seed trench, and the 3D location of artifacts or seed within the seed trench. See U.S. Application Nos. 17/900,612 and 16/918,293 and International Application No. PCT/US23/12451 for examples of agricultural machines that utilize camera data.

Often, the camera data from many adjacent images are analyzed to identify characteristics of the trench or commodity distributed therein. For example, a camera may capture about forty image frames per second as the agricultural machine travels along an underlying surface. The agricultural machine may travel along the underlying surface at about five miles per hour during a planting operation. **In** this example, for a ten second interval the agricultural machine may have planted commodity for about seventy-three linear feet and the camera may have captured about four-hundred frames of image data. Each of the four-hundred frames of data from this example may be analyzed to determine features of the trench and commodity such as commodity spacing, fertilizer and seed placement, trench quality, and trench depth among other things. For systems that rely on the captured camera data, it is important for the user and other systems of the work machine to understand the confidence with which the camera data may be relied upon. Accordingly, one aspect of this disclosure provides a method for providing feedback regarding the confidence for which the provided image data can be analyzed. **In** other words, if 100% of the images can be analyzed to provide the required information, the confidence may be about 100. However, if only 50% of the image can be analyzed over a given timeframe (i.e., due to obstructions to the camera such as dust, camera image quality errors, or other hardware or environmental inputs that affect the image quality provided by the camera), the provided confidence may only be 50.

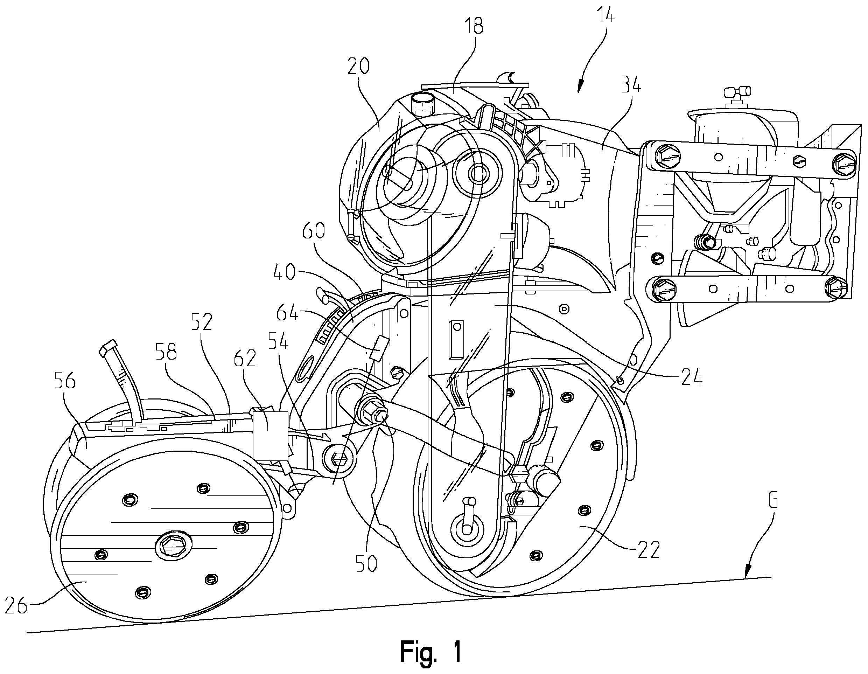

The specific examples given herein regarding camera capture rate, speed of the work machine, and confidence numbers are only some examples of the embodiments considered as part of this disclosure. Accordingly, the teachings of this disclosure may be applied to cameras that capture images at greater than forty frames per second. Similarly, this disclosure also contemplates applying the teachings discussed herein to systems having a camera that captures images at less than forty images per second. The teachings of this disclosure can also be applied to any speed of the work machine and the specific confidence numbers can be tailored to any specific application. Referring now to Fig. 1 of the present disclosure, one exemplary embodiment of a planter row unit 14 connected to an agricultural work machine (not illustrated) such as a planter or seeder is shown. The planter row unit 14 is an illustrative embodiment wherein other embodiments of planter row units can be used with the present disclosure. **In** Fig. 1, only a single planter row unit 14 is shown, but a plurality of planter row units 14 may be coupled to a frame of the agricultural work machine or the toolbar of an implement in in any known manner. The planter row unit 14 may be coupled to the frame or toolbar by a linkage (not illustrated) so that the planter row unit 14 can move up and down to a limited degree relative to the frame or toolbar.

Each planter row unit 14 may include an auxiliary or secondary hopper 18 for holding product such as fertilizer, seed, chemical, or any other known product or commodity. **In** this embodiment, the secondary hopper 18 may hold seed. As such, a seed meter 20 is shown for metering seed received from the secondary seed hopper 18. One or more furrow opener or opening wheel 22 may be provided on the planter row unit 14 for forming a furrow or trench in a field for receiving metered seed (or other commodity) from the seed meter 20. The seed or other product may be transferred to the trench from the seed meter 20 by a seed tube 24 or a brushbelt assembly. A closing assembly or closing wheel 26 may be coupled to each planter row unit 14 and is used to close the furrow or trench with the seed or other product contained therein.

**In** one embodiment, the seed meter 20 is a vacuum seed meter, although in alternative embodiments other types of seed meters using mechanical assemblies or positive air pressure may also be used for metering seed or other product. **In** one embodiment, a brushbelt assembly distributes the seed into the corresponding furrow or trench. As described above, the present disclosure considers alternatives to dispensing seed. Rather, the principles and teachings of the present disclosure may also be used to apply non-seed products to the field. For seed and non-seed products, the planter row unit 14 may be considered an application unit with a secondary hopper 18 for holding product, a product meter for metering product received from the secondary hopper 18 and an applicator for applying the metered product to a field. For example, a dry chemical fertilizer or pesticide may be directed to the secondary hopper 18 and metered by the product meter 20 and applied to the field by the applicator.

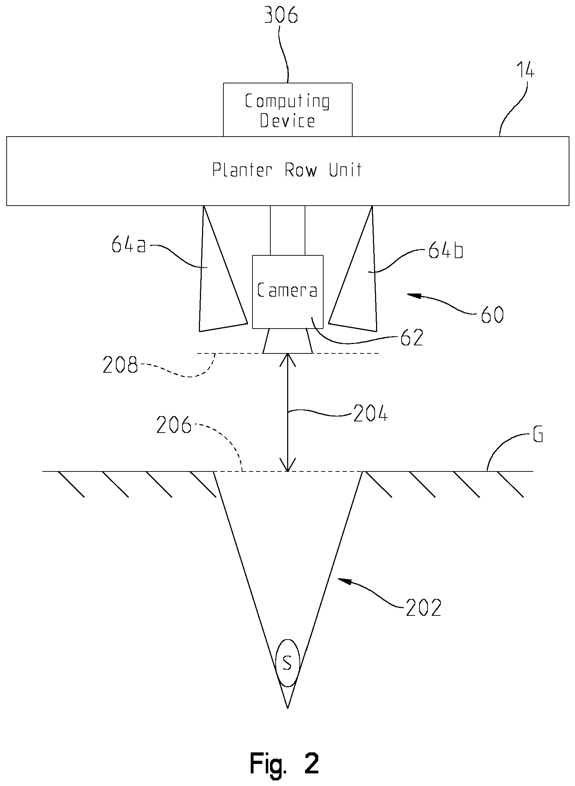

The planter row unit 14 includes a shank 40 that extends away from a body portion 34. The shank 40 is pivotally coupled at pivot 50 to a shank extension 52. The shank extension 52 has a pivot end 54 that is pivotably connected to the pivot 50 and an opposite shank extension end 56 with a shank body portion 58 that spans between the pivot end 54 and the shank extension end 56. The planter row unit 14 includes a pair of gauge wheels rotatably mounted on the body portion 34 and a pair of closing wheels 26 rotatably mounted on the shank extension 52. The pair of opening wheels 22 form an actual trench or furrow 202 (see Fig. 2) in the underlying surface, for example ground surface G, during operation of the planter row unit 14. Alternatively, other opening devices can be used in place of the pair of opening wheels 22. The pair of closing wheels 26 close or cover the actual trench or furrow 202 with displaced soil that occurs from the pair of opening wheels 22 opening or forming the trench 202 in the ground surface G. Alternatively, other closing devices can be used in place of the pair of closing wheels 26.

A visualization system 60 is operably connected and mounted to the planter row unit 14 as illustrated in Figs. 1 and 2. The visualization system 60 includes a camera 62 and may include one or more light 64, 64a, 64b. The camera 62 is mounted between the pair of closing wheels 26 and the pair of opening wheels 22 or alternatively the camera 62 is mounted between the pair of closing wheels 26 and the seed tube 24. In other embodiments, the camera 62 is positioned at any location that provides a visual perspective to the camera 62 of the opened furrow 202. The light 64 is also mounted between the pair of closing wheels 26 and the pair of opening wheels 22 or alternatively the light 64 is mounted between the pair of closing wheels 26 and the seed tube 24. In other embodiments, the light 64 is positioned at any location that allows the light 64 to illuminate the opened furrow or trench for the camera 62.

In any embodiment, the camera 62 is oriented to point down towards the ground surface G at the actual trench 202 that is formed by the pair of opening wheels 22. As such, the camera 62 and the light 64 can be operated in the visible spectrum range, or outside of the visible spectrum range such as infrared range, in order to have better air obscurant penetration such as dust penetration. While the actual trench 202 is formed by the gauge wheels 22, soil and dust can fill or permeate the air so it is difficult for the operator or a conventional color camera to capture the actual trench 202 cross-sectional shape. A near infrared camera, such as a short wavelength infra-red camera, can be used in one embodiment of this disclosure. In another embodiment, the camera 62 may provide image data in a visible light spectrum, near-infrared spectrum, or infrared spectrum.

In certain embodiments, the visualization system 60 includes or is operatively connected to a computing device 306 such as a controller structured to perform certain operations to control the camera 62 and the light 64. In certain embodiments, the camera 62 includes the controller. In certain embodiments, the controller forms a portion of a processing subsystem including one or more computing devices having memory, processing, and communication hardware. The controller may be a single device or a distributed device, and the functions of the controller may be performed by hardware or by instructions encoded on computer readable medium. The controller may be included within, partially included within, or completely separated from other controllers (not shown) associated with the work machine and/or the visualization system 60. The controller is in communication with any sensor or other apparatus throughout the visualization system 60, including through direct communication, communication over a datalink, and/or through communication with other controllers or portions of the processing subsystem that provide sensor and/or other information to the controller.

In certain embodiments, the computing device 306 is described as functionally executing certain operations. The descriptions herein including the controller operations emphasize the structural independence of the computing device 306, and illustrate one grouping of operations and responsibilities of the computing device 306. Other groupings that execute similar overall operations are understood within the scope of the present application. Aspects of the computing device 306 may be implemented in hardware and/or by a computer executing instructions stored in non-transient memory on one or more computer readable media, and the computing device 306 may be distributed across various hardware or computer based components.

Example and non-limiting computing device 306 implementation elements include sensors providing any value determined herein, sensors providing any value that is a precursor to a value determined herein, datalink and/or network hardware including communication chips, oscillating crystals, communication links, cables, twisted pair wiring, coaxial wiring, shielded wiring, transmitters, receivers, and/or transceivers, logic circuits, hard-wired logic circuits, reconfigurable logic circuits in a particular non-transient state configured according to the module specification, any actuator including at least an electrical, hydraulic, or pneumatic actuator, a solenoid, an opamp, analog control elements (springs, filters, integrators, adders, dividers, gain elements), and/or digital control elements.

The listing herein of specific implementation elements is not exhaustive, and any implementation element for any computing device described herein that would be understood by one of skill in the art is contemplated herein. The computing devices herein, once the operations are described, are capable of numerous hardware and/or computer based implementations, many of the specific implementations of which involve mechanical steps for one of skill in the art having the benefit of the disclosures herein and the understanding of the operations of the computing devices provided by the present disclosure.

One of skill in the art, having the benefit of the disclosures herein, will recognize that the computing devices, controllers, control systems and control methods disclosed herein are structured to perform operations that improve various technologies and provide improvements in various technological fields. Certain operations described herein include operations to interpret one or more parameters. Interpreting, as utilized herein, includes receiving values by any method known in the art, including at least receiving values from a datalink or network communication, receiving an electronic signal (e.g. a voltage, frequency, current, or PWM signal) indicative of the value, receiving a software parameter indicative of the value, reading the value from a memory location on a non-transient computer readable storage medium, receiving the value as a run-time parameter by any means known in the art, and/or by receiving a value by which the interpreted parameter can be calculated, and/or by referencing a default value that is interpreted to be the parameter value.

Referring now specifically to Fig. 2, a schematic section view of one exemplary embodiment of components contemplated herein for this disclosure is illustrated. More specifically, a section view looking down the length of the open furrow 202 with a seed S positioned therein is illustrated. From this perspective, the camera 62 is illustrated directed down towards the furrow 202. The camera 62 may be positioned on the row unit 14 such that the camera 62 can capture image data of the furrow 202 while in the opened configuration (i.e., between the opening wheels 22 and closing wheels 26). Lights 64a, 64b may be positioned adjacent to the camera 62 to generally illuminate the open furrow 202 to provide enhanced image data. While the lights 64a, 64b are illustrated on opposing sides of the camera 62 relative to the furrow 202 in Fig. 2, this disclosure contemplates positioning the lights 64a, 64b in front of and behind the camera 62 from the perspective of Fig. 2. Alternatively, a light or lights may be positioned around the camera 62 or in any configuration that illuminates the furrow 202.

While two lights 64a, 64b are illustrated in Fig. 2, this disclosure contemplates using more, or fewer lights, if any at all. In one aspect of this disclosure, a plurality of lights may substantially surround the camera 62. In yet another embodiment, only one light may be positioned next to the camera 62 to illuminate the furrow 202. In yet another embodiment, the camera 62 may be configured to provide sufficient image data based on the expected ambient lighting conditions of a field and not require any additional lighting at all.

As illustrated in Fig. 2, the camera 62 may be a distance 204 from a ground plane 206. The ground plane 206 may generally represent the planar orientation of the surface of the unopened ground G surrounding the furrow 202. The distance 204 may be generally known based on the fixed positioning of the camera 62 to the planter row unit 14 and the planting depth of the planter row unit 14. In other words, the camera 62 may typically move in a horizontal plane 208 parallel to the ground plane 206 and adjustments to the planting depth of the planter row unit 14 will adjust the distance 204 of the camera 62 from the ground G.

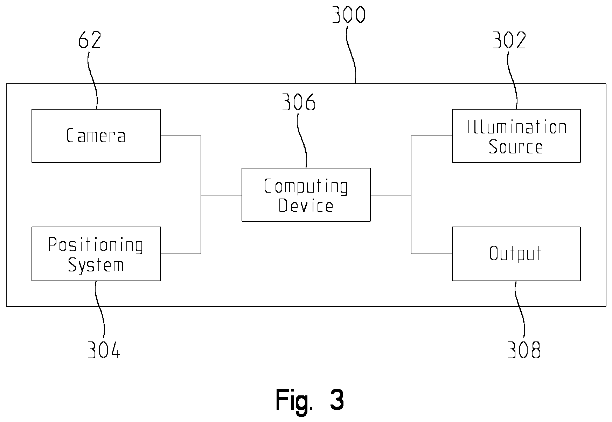

Referring to Fig. 3, a schematic representation of select components of an agricultural work machine 300 is illustrated. The agricultural work machine 300 may be coupled to, and include, the planter row unit 14 to selectively move the planter row unit 14 along the underlying surface or ground G. The agricultural work machine 300 may include the camera 62 and an illumination source 302 such as lights 64a and 64b. Further, the agricultural work machine 300 may include a positioning system 304. The positioning system 304 may be a Global Positioning System ("GPS") capable of identifying the geographic location of the agricultural work machine 300. The positioning system 304 may include a vehicle speed sensor wherein the speed of the agricultural work machine 300 is specifically monitored. In one aspect of this disclosure, the speed of the agricultural work machine 300 is determined using the displacement of the geographic location via GPS. Regardless, the positioning system 304 may be used by the computing device 306 to determine the displacement of the camera 62 between image captures. For example, if the camera 62 is mounted to a tool bar of the work machine 300, the computing device 306 may utilize vehicle speed between image captures to determine camera 62 displacement between image captures. Similarly, the computing device 306 may record the geographic location of the camera 62 or the work machine 300 and determine the geographic distance displacement between the image captures.

The camera 62 and positioning system 304 may be communicatively coupled to the computing device 306. Further, the computing device 306 may be communicatively coupled to an output 308. The output 308 may be a visual display in a cab of the work machine 300, an audio device, or a haptic feedback device that may be selectively engaged by the computing device 306 to provide information about the agricultural work machine 300. In yet another embodiment considered herein, the output 308 may be wirelessly transmitted to a remote device to be used by a remote user. In one aspect of this disclosure, the output 308 may provide access to a remote database such as a cloud-based system. The computing device 306 may be, or include, the controller discussed herein. Alternatively, the computing device 306 may be any control module or the like on the agricultural work machine 300. Accordingly, the computing device 306 contemplated herein may be any device capable of analyzing inputs and providing outputs as discussed herein.

In one aspect of this disclosure, a camera confidence logic 400 is applied to the captured image data for a given time interval to provide feedback containing a camera confidence. More specifically, in box 402 the computing device 306 may obtain image data from the camera for a given time interval. The given time interval may be any rolling time interval and in one example the time interval may be plus and minus five seconds for any given recorded image. More specifically, as mentioned herein, the camera 62 may continuously record image data during a planting operation. A time interval may be generated for any point in time during the planting operation wherein the image data for five seconds before and after that point in time is considered when evaluating camera confidence.

While a plus/minus five second time interval is specifically discussed herein, this disclosure contemplates using time intervals that are less than plus/minus five seconds and time intervals that are greater than plus/minus five seconds. Accordingly, the teachings of this disclosure could be applied to any time interval.

Regardless the length of the time interval, in box 404 all of the image data provided by the camera 62 will be processed by the computing device 306 or otherwise to identify the inadequate images therein. More specifically, the image data may include images that contain great amounts of dust that obstruct the camera view of the furrow. Similarly, the camera lens may become compromised and be unable to provide clear image data for the furrow. An image may be labelled inadequate by the computing device 306 whenever the image cannot be properly analyzed to provide the desired information. According to the invention, the image data is used to determine the depth of the furrow. In order to properly identify the depth of the furrow, the computing device generates a point cloud wherein specific artifacts are identified in the image to determine the depth of the furrow. If the image data is not sufficiently clear to populate the point cloud with a sufficient number of artifacts to properly determine the furrow depth, that particular image may be labelled as inadequate in box 404. The computing device 306 may analyze all images from the time interval in box 404 to determine the number of inadequate images provided therein.

In box 406, the number of inadequate images provided for the time interval is determined by the computing device 306. A camera confidence value may be generated in box 408 based on the number of inadequate images identified in box 406. The camera confidence value may be based on the ratio of inadequate images compared to the total number of images provided for the time interval. In one example, the camera confidence can be provided as the percentage of images from the time interval that were properly analyzed by the computing device 306 to provide the corresponding information such as furrow depth.

In box 410, feedback regarding the camera confidence is provided. The provided feedback may be through a user interface wherein the user can see the camera confidence for a selected time. Further, the user interface may have a bar that corresponds with camera confidence. For example, as camera confidence goes down, the bar may become smaller. Further still, in one contemplated embodiment the bar may change form if the camera confidence drops below a threshold. For example, if the camera confidence drops below the threshold, the bar may change from a solid color to having hash marks there through. Alternatively, the color of the bar may change as the camera confidence drops below the threshold. Alternatively, the feedback provided to the user may be in any perceivable form. For example, an audio, visual, or haptic alert may be provided when camera confidence drops below a threshold.

In one aspect of this disclosure, the camera confidence can be generated in real time based on historical image data. In this embodiment, the time interval from box 402 is based on historical data. For example, the time interval may be the prior ten seconds of image data. **In** this example, the camera confidence may be representative of the current camera confidence during a planting operation.

**In** one embodiment contemplated herein, the feedback providing camera confidence from box 410 may be communicated to another system of the work machine or otherwise considered by the computing device 306 to generate appropriate responses from automated systems. For example, if the work machine has a downforce automation system reliant on the furrow depth from the image data, the furrow depth generated from the image data may not be considered when the data has a camera confidence below a preset threshold. Alternatively, the downforce automation system may rely on image data provided to the downforce automation system that has a camera confidence above the preset threshold. In other words, automated system may selectively use camera data only when it has a camera confidence above a threshold. Similar automation responses are contemplated herein for row cleaner automated systems and depth control automated systems among others.

In one aspect of this disclosure, the provided feedback may include directions to alleviate poor camera confidence. For example, the provided feedback may provide instructions to use adjacent row sensors for the requested data, recommend cleaning the camera, recommend reducing speed to reduce dust, recommend changing row cleaner settings, recommend changing downforce settings, recommend changing shield height setting for sunlight intrusion, and/or recommend changing machine direction to reduce sunlight intrusion among other things.

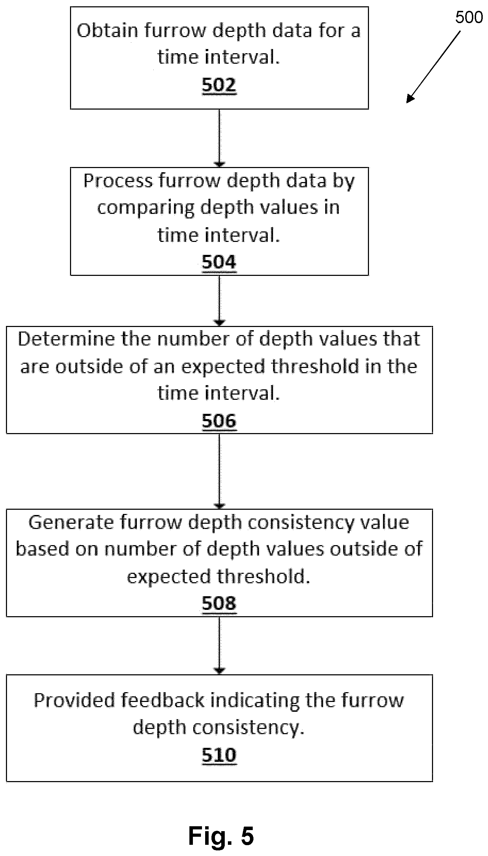

Similarly referring to Fig. 5, a furrow depth consistency logic 500 is illustrated. When the furrow depth readings are consistent and are measured within a narrow band, the average of these readings can appropriately be used to represent the furrow depth as a whole. However, when the furrow depth readings are inconsistent and measure within a large band, or cannot be measured, the average of available readings may not represent the furrow depth as a whole. Accordingly, furrow consistency is an additional metric that can be considered to understand furrow performance, availability of depth readings, and support decision making around confirming seed placement among other things.

The furrow depth consistency logic 500 may initially consider all of the furrow depth values generated in a time interval in box 502. The time interval may be any time interval before and/or after the target time. In one example, the time interval for the furrow depth consistency logic may be substantially similar to that described herein for the camera confidence logic 400. The furrow depth data may be collected using any known furrow depth determination. In one example, the image data provided by the camera 62 may be processed by the computing device 306 to identify the furrow depth based on the image data. However, other methods of determining furrow depth are contemplated herein to provide the furrow depth data.

In box 504, the furrow depth data is processed and the depth values provided across a time interval are compared. In box 506, the computing device 306 or other similarly capable component may determine the number of depth values within the time interval that are outside of an expected threshold. For example, furrow depth values may be compared to previous and/or subsequent furrow depth values to identify if the furrow depth value is within a threshold range. In one example, the threshold range may be within 0,64 cm (0.25 inches) of the previous and/or subsequent furrow depth value. However, this disclosure also contemplates utilizing threshold ranges greater than 0,64 cm (0.25 inches) and less than 0,64 cm (0.25 inches). In box 508, the computing device may generate a furrow depth consistency value based on the number of depth values outside of the expected threshold for the time interval. For example, if the furrow depth value of any given data point is not within the threshold range of the furrow depths identified for the time interval, the computing device may flag that data point for consideration regarding furrow depth consistency.

The furrow depth consistency may be generated based on the number of flagged data points for the time interval. In one non-exclusive example, the furrow depth consistency may be the percentage of furrow depth values that were within the expected threshold range for the time interval. Regardless, the furrow depth consistency may be provided in box 510. The furrow depth consistency may be provided to a user through a user interface similar to the camera confidence discussed herein. More specifically, a user interface may illustrate the measured furrow depth along with showing a furrow depth consistency bar thereunder. If the furrow depth consistency goes down, the bar may become shorter and/or obtain hashing. Further, the provided feedback may be directed towards other automated systems of the work machine as described herein for the camera confidence.

While embodiments incorporating the principles of the present disclosure have been described hereinabove, the present disclosure is not limited to the described embodiments.

## Claims

1. A method for evaluating provided data accuracy for an agricultural work machine, comprising:
(402) obtaining image data from a camera (62) on the agricultural work machine (300);
(404) processing the image data for a time interval and identifying inadequate images;
(406) determining the number of inadequate images compared to the total number of images for the time interval;
(408) generating a camera confidence based on the ratio of inadequate images to total images for the time interval; and
(410) providing a feedback indicating the camera confidence, wherein the image data comprises images of a furrow (202), **characterized in that**
inadequate images comprise images that cannot be evaluated to determine a depth of a furrow (202), wherein in order to properly identify the depth of the furrow, a computing device (306) generates a point cloud with a number of artifacts, which are identified in the image to determine the depth of the furrow (202), wherein if the image data is not sufficiently clear to populate the point cloud with a sufficient number of artifacts to properly determine the furrow depth, that particular image is labelled as inadequate.

2. The method of one of the claims 1, wherein the feedback indicating the camera confidence is displayed visually on a user interface.

3. The method of one of the claims 1 or 2, wherein the user interface displays a bar configured to change in size to correspond with the camera confidence.

4. The method of claim 3, wherein the bar transitions from solid to hashed when the camera confidence is below a threshold.

5. The method of one of the claims 1 to 4, wherein the feedback indicating the camera confidence is considered by an automated system.

6. The method of one of the claims 1 to 5, further comprising:
(502) obtaining a plurality of values for a time interval;
(504) processing the plurality of values by comparing each of the plurality of values to one or more other of the plurality of values;
(506) identifying the number of outliers in the plurality of values for the time interval;
(508) generating a value confidence for the time interval by comparing the number of outliers with the total number of plurality of values for the time interval;
(510) providing feedback indicating the value confidence.

7. The method of claim 6, wherein each of the plurality of values comprise a furrow depth value determined from image data provided by the camera (62).

8. The method of claim 6 or 7, when dependent on claim 2, wherein the feedback indicating the value confidence is displayed visually on the user interface, wherein the user interface displays a bar configured to change in size to correspond with the value confidence.

9. The method of one of the claims 6 to 8, when dependent on claim 5, wherein the feedback indicating the value confidence is considered by the automated system.

10. The method of one of the claims 5 to 9, when dependent on claim 5, wherein the automated system is one or more of a downforce automation system, a row cleaner automation system, and a depth control automation system.

## Patentansprüche

1. Verfahren zum Auswerten einer bereitgestellten Datengenauigkeit für eine landwirtschaftliche Arbeitsmaschine, das Folgendes umfasst:
(402) Erhalten von Bilddaten von einer Kamera (62) an der landwirtschaftlichen Arbeitsmaschine (300);
(404) Verarbeiten der Bilddaten für ein Zeitintervall und Identifizieren unzureichender Bilder;
(406) Bestimmen der Anzahl unzureichender Bilder im Vergleich zur Gesamtzahl von Bildern für das Zeitintervall;
(408) Erzeugen einer Kamerakonfidenz basierend auf dem Verhältnis unzureichender Bilder zu Gesamtbildern für das Zeitintervall; und
(410) Bereitstellen einer Rückmeldung, die die Kamerakonfidenz angibt, wobei die Bilddaten Bilder einer Furche (202) umfassen, **dadurch gekennzeichnet, dass**
unzureichende Bilder Bilder umfassen, die nicht ausgewertet werden können, um eine Tiefe einer Furche (202) zu bestimmen, wobei, um die Tiefe der Furche richtig zu identifizieren, eine Rechenvorrichtung (306) eine Punktwolke mit einer Anzahl von Artefakten erzeugt, die in dem Bild identifiziert werden, um die Tiefe der Furche (202) zu bestimmen, wobei, wenn die Bilddaten nicht ausreichend klar sind, um die Punktwolke mit einer ausreichenden Anzahl von Artefakten zu füllen, um die Furchentiefe richtig zu bestimmen, dieses jeweilige Bild als unzureichend bezeichnet wird.

2. Verfahren nach Anspruch 1, wobei die Rückmeldung, die die Kamerakonfidenz angibt, visuell auf einer Benutzerschnittstelle angezeigt wird.

3. Verfahren nach Anspruch 1 oder 2, wobei die Benutzerschnittstelle einen Balken anzeigt, der so konfiguriert ist, dass er sich in der Größe ändert, um der Kamerakonfidenz zu entsprechen.

4. Verfahren nach Anspruch 3, wobei der Balken von durchgezogen zu schraffiert wechselt, wenn die Kamerakonfidenz unter einem Schwellenwert liegt.

5. Verfahren nach einem der Ansprüche 1 bis 4, wobei die Rückmeldung, die die Kamerakonfidenz angibt, von einem automatisierten System berücksichtigt wird.

6. Verfahren nach einem der Ansprüche 1 bis 5, das ferner Folgendes umfasst:
(502) Erhalten mehrerer Werte für ein Zeitintervall;
(504) Verarbeiten der mehreren Werte durch Vergleichen jedes der mehreren Werte mit einem oder mehreren anderen der mehreren Werte;
(506) Identifizieren der Anzahl von Ausreißern in den mehreren Werten für das Zeitintervall;
(508) Erzeugen einer Wertkonfidenz für das Zeitintervall durch Vergleichen der Anzahl von Ausreißern mit der Gesamtzahl mehrerer Werte für das Zeitintervall;
(510) Bereitstellen einer Rückmeldung, die die Wertkonfidenz angibt.

7. Verfahren nach Anspruch 6, wobei jeder der mehreren Werte einen Furchentiefewert umfasst, der aus von der Kamera (62) bereitgestellten Bilddaten bestimmt wird.

8. Verfahren nach Anspruch 6 oder 7, wenn abhängig von Anspruch 2, wobei die Rückmeldung, die die Wertkonfidenz angibt, visuell auf der Benutzerschnittstelle angezeigt wird, wobei die Benutzerschnittstelle einen Balken anzeigt, der so konfiguriert ist, dass er sich in der Größe ändert, um der Wertkonfidenz zu entsprechen.

9. Verfahren nach einem der Ansprüche 6 bis 8, wenn abhängig von Anspruch 5, wobei die Rückmeldung, die die Wertkonfidenz angibt, von dem automatisierten System berücksichtigt wird.

10. Verfahren nach einem der Ansprüche 5 bis 9, wenn abhängig von Anspruch 5, wobei das automatisierte System eines oder mehrere von einem Anpressdruckautomatisierungssystem, einem Reihenreinigungsautomatisierungssystem und einem Tiefenbegrenzungsautomatisierungssystem ist.

## Revendications

1. Procédé d'évaluation de la précision de données fournies pour un engin de travail agricole, le procédé comprenant les étapes suivantes :
(402) obtenir des données d'image depuis une caméra (62) située sur l'engin de travail agricole (300) ;
(404) traiter les données d'image pendant un intervalle de temps et identifier des images inadéquates ;
(406) déterminer le nombre d'images inadéquates par rapport au nombre total d'images pour l'intervalle de temps ;
(408) générer une confiance de caméra basée sur le rapport entre les images inadéquates et les images totales pour l'intervalle de temps ; et
(410) fournir une rétroaction indiquant la confiance de la caméra, où les données d'image comprennent des images d'un sillon (202), **caractérisé en ce que**
les images inadéquates comprennent des images qui ne peuvent pas être évaluées pour déterminer la profondeur d'un sillon (202), où, afin d'identifier correctement la profondeur du sillon, un dispositif informatique (306) génère un nuage de points avec un nombre d'artefacts, qui sont identifiés dans l'image pour déterminer la profondeur du sillon (202), où, si les données d'image ne sont pas suffisamment claires pour remplir le nuage de points avec un nombre suffisant d'artefacts pour déterminer correctement la profondeur du sillon, cette image particulière est qualifiée d'inadéquate.

2. Procédé selon la revendication 1, dans lequel la rétroaction indiquant la confiance de la caméra est affichée visuellement sur une interface utilisateur.

3. Procédé selon l'une des revendications 1 ou 2, dans lequel l'interface utilisateur affiche une barre configurée pour changer de taille afin de correspondre à la confiance de la caméra.

4. Procédé selon la revendication 3, dans lequel la barre passe d'un aspect plein à un aspect hachuré lorsque la confiance de la caméra est inférieure à un seuil.

5. Procédé selon l'une des revendications 1 à 4, dans lequel la rétroaction indiquant la confiance de la caméra est considérée par un système automatisé.

6. Procédé selon l'une des revendications 1 à 5, comprenant en outre les étapes suivantes :
(502) obtenir une pluralité de valeurs pour un intervalle de temps ;
(504) traiter la pluralité de valeurs en comparant chacune de la pluralité de valeurs à une ou plusieurs autres parmi la pluralité de valeurs ;
(506) identifier le nombre de valeurs aberrantes dans la pluralité de valeurs pour l'intervalle de temps ;
(508) générer une confiance de valeur pour l'intervalle de temps en comparant le nombre de valeurs aberrantes avec le nombre total de la pluralité de valeurs pour l'intervalle de temps ;
(510) fournir une rétroaction indiquant la confiance de valeur.

7. Procédé selon la revendication 6, dans lequel chacune de la pluralité de valeurs comprend une valeur de profondeur de sillon déterminée à partir de données d'image fournies par la caméra (62).

8. Procédé selon la revendication 6 ou la revendication 7, lorsqu'elle dépend de la revendication 2, dans lequel la rétroaction indiquant la confiance de valeur est affichée visuellement sur l'interface utilisateur, où l'interface utilisateur affiche une barre configurée pour changer de taille afin de correspondre à la confiance de valeur.

9. Procédé selon l'une des revendications 6 à 8, lorsqu'elles dépendent de la revendication 5, dans lequel la rétroaction indiquant la confiance de valeur est prise en compte par le système automatisé.

10. Procédé selon l'une quelconque des revendications 5 à 9, lorsqu'elles dépendent de la revendication 5, dans lequel le système automatisé est un ou plusieurs systèmes parmi un système d'automatisation d'appui vertical, un système d'automatisation de nettoyage de rang et un système d'automatisation de commande de profondeur.
